# FASCICULE DE BREVET EUROPEEN

(11) **EP 2 912 345 B1**
(45) Date de publication et mention de la délivrance du brevet: **30.11.2016**
(21) Numéro de dépôt: 13789864.9
(22) Date de dépôt: 21.10.2013
(51) Int. Cl.: F16H 1/20, F16H 57/023, F16H 57/031, H02K 5/22, H02K 7/116, H02K 5/10, H02K 11/215, F16H 57/02, H02K 7/14

(54) **DISPOSITIF D'ACTIONNEMENT D'UN OU PLUSIEURS ORGANES MOBILES, NOTAMMENT POUR TURBOCOMPRESSEUR DE VEHICULE AUTOMOBILE**
VORRICHTUNG ZUR BETÄTIGUNG EINES ODER MEHRERER BEWEGLICHER TEILE, INSBESONDERE FÜR EINEN KRAFTFAHRZEUG-TURBOLADER
DEVICE FOR ACTUATING ONE OR MORE MOVING PARTS, NOTABLY FOR A MOTOR VEHICLE TURBOCHARGER

(30) Priorité: 24.10.2012 FR 1260143
(43) Date de publication de la demande: 02.09.2015
(73) Titulaire: Valeo Systèmes de Contrôle Moteur, 95800 Cergy (FR)
(72) Inventeur: LEMERCIER, Pierre, F-75020 Paris (FR); RIDOLFI, Gabriel, 27150 HACQUEVILLE (FR)
(74) Mandataire: Garcia, Christine
(86) Numéro de dépôt international: PCT/FR2013/052503
(87) Numéro de publication internationale: WO 2014/064374

(56) Documents cités:
- EP-A1- 1 167 724
- DE-A1-102011 004 027
- JP-A- 2007 181 284
- JP-U- S54 129 707
- US-A- 3 358 525
- US-A1- 2010 301 691
- US-A1- 2011 050 012

## Description

L'invention concerne un dispositif d'actionnement d'un ou plusieurs organes mobiles et un ensemble d'un tel dispositif d'actionnement et du ou des organes mobiles destinés être actionnés par ledit dispositif. Elle trouvera ses applications, notamment, dans le domaine des turbocompresseurs pour le réglage du positionnement des aubes de la turbine. De nombreuses autres applications sont cependant possibles.

Dans ce domaine, il est connu des actionneurs pneumatiques. Ils ne présentent cependant pas toujours le meilleur compromis en termes de performance et de prix, en particulier pour des applications à coûts limités dans des environnements sévères tels que les applications sous capot dans les véhicules automobiles.

On leur préfère ainsi parfois des actionneurs employant un moteur électrique. Il est connu dans ce domaine des dispositifs d'actionnement comprenant un arbre moteur, un arbre de sortie et une cinématique de transmission de couple de l'arbre moteur à l'arbre de sortie, à l'aide de roues de transmission. La cinématique de transmission permet de fixer le rapport de réduction entre l'arbre moteur et l'arbre de sortie.

Dans le cas, comme dans les vannes d'alimentation en air d'un moteur thermique de véhicule, où le ou les organes mobiles actionnés par la vanne, tels que des volets, sont articulés parallèlement à un moteur d'entrainement dudit arbre moteur, la cinématique de transmission permet en outre d'assurer un écartement suffisant entre l'arbre moteur et l'arbre de sortie de manière à tenir compte du débattement des organes de sortie. Les axes de pivotement de l'arbre moteur, des roues de transmission et de l'arbre de sortie sont alors dans un même plan. Autrement dit, vue dans un plan orthogonal auxdits axes de pivotement, ces derniers sont alignés.

Un dispositif d'actionnement selon le préambule de la revendication 1 est connu du document EP 1 167 724 A1.

Le besoin de dispositifs d'actionnement plus compacts demeure cependant.

L'invention propose en ce sens un dispositif d'actionnement d'un ou plusieurs organes mobiles, notamment pour turbocompresseur de véhicule automobile, ledit dispositif comprenant un arbre moteur, un arbre de sortie, et une cinématique de transmission d'un couple dudit arbre moteur audit arbre de sortie, ladite cinématique comprenant au moins une roue de transmission du couple dudit arbre moteur audit arbre de sortie, lesdits arbres moteur et de sortie et ladite ou lesdites roues de transmission étant mobiles en rotation autour d'axes de pivotement respectifs.

Selon l'invention, l'axe de pivotement de l'une au moins desdites roues de transmission est décalé par rapport à un plan passant par l'axe de pivotement desdits arbres moteur et de sortie. En utilisant des axes de pivotement positionnés de la sorte, le dispositif offre un encombrement limité car les organes de transmission, vus dans un plan orthogonal auxdits axes de pivotement, sont mieux répartis, ceci pour un même rapport de réduction.

Lesdits axes de pivotement sont avantageusement positionnés de façon à ce qu'une ligne reliant radialement lesdits axes de pivotement soit une ligne brisée changeant de direction à chaque axe de pivotement.

Selon l'invention, ledit dispositif comprend un moteur d'entrainement en rotation de l'arbre moteur, en particulier un moteur électrique, ledit moteur étant muni d'au moins deux connecteurs d'alimentation saillant dudit moteur avec une composante parallèle audit arbre moteur, notamment parallèlement audit moteur. Un tel mode de réalisation permet d'orienter les organes de transmission du couple dudit dispositif et les connecteurs électriques de son moteur dans une même direction ce qui permet de réaliser l'alimentation du moteur d'entrainement desdits organes et leur contrôle à l'aide d'un nombre réduit de pièces et dans un encombrement limité.

Lesdits connecteurs sont placés à l'intérieur d'un secteur angulaire formé à partir de l'axe de pivotement de l'arbre moteur et faisant moins de 180°, en particulier moins de 120°, voir moins de 90°. Selon cette dernière caractéristique, on améliore encore la compacité du dispositif.

A ce sujet, l'une, dite première, desdites roues de transmission pourra avantageusement s'engrener sur ledit arbre moteur et une ou plusieurs autres roues de transmission de ladite cinématique se trouvent au moins en partie à l'aplomb dudit moteur d'entrainement. On tire de la sorte pleinement profit de la disposition des connecteurs telle que prévue plus haut.

Cela étant, selon ce premier aspect de l'invention, les caractéristiques suivantes, prises ensemble ou séparément, pourront être utilisées :
- ledit dispositif comprend un corps définissant un logement dans lequel ledit arbre moteur et/ou ledit arbre de sortie débouchent et/ou dans lequel ladite cinématique de transmission est située,
- ledit dispositif comprend un couvercle de fermeture dudit logement, ledit couvercle comprenant des éléments de connexion électrique auxdits connecteurs et/ou un capteur de position angulaire coopérant avec ledit arbre moteur, ledit arbre de sortie et/ou ladite cinématique de transmission,
- lesdits éléments de connexion électriques et/ou ledit capteur angulaire sont surmoulés sur ledit couvercle,

Selon l'invention, la ou lesdites roues de transmission comprennent respectivement un arbre d'articulation en rotation de la ou desdites roues de transmission autour de leur axe de pivotement. Ladite cinématique comprend une roue de sortie, liée audit arbre de sortie. Ledit dispositif comprend en outre, d'une part, des fûts d'articulation en pivotement de l'arbre de la ou desdites roues de transmission et/ou dudit arbre de sortie, et, d'autre part, une entretoise disposée entre l'un desdits fûts, dit fût court, et celle desdites roues de transmission et/ou de sortie, dite roue surélevée, articulée sur ledit fût court, selon l'axe de pivotement de ladite roue surélevée.

Ladite entretoise est d'un diamètre externe inférieur à un diamètre externe dudit fût court. Une telle disposition permet d'améliorer encore la compacité en autorisant une plus grande imbrication des roues de transmission.

On peut d'ailleurs noter que de telles caractéristiques permettent d'améliorer la compacité.

Cela étant, selon cet autre aspect de l'invention, les caractéristiques suivantes pourront être utilisées, ensemble ou séparément :
- les fûts des roues de transmission présentent une hauteur, selon l'axe de pivotement de la roue correspondante, proche d'un fût à l'autre,
- ladite roue surélevée engrène sur l'une, voisine, desdites autres roues de transmission, comprenant un petit et un grand pignons, ledit petit pignon engrenant avec ladite roue surélevée et ledit grand pignon étant positionné pour tourner en vis-à-vis de ladite entretoise,
- ledit grand pignon présente une extension radiale supérieure à la distance entre l'axe de pivotement de la roue portant lesdits petit et grand pignons et le point le plus proche du diamètre extérieur dudit fût court.

Ledit dispositif pourra encore comprendre une manivelle configurée pour actionner le ou lesdits organes mobiles à partir du couple fourni par ledit arbre de sortie.

L'invention concerne également un ensemble du dispositif d'actionnement tel que décrit plus haut et du ou des organes mobiles destinés être actionnés par ledit dispositif.

D'autres caractéristiques et avantages de l'invention apparaîtront à la lecture de la description qui suit et qui se rapporte à des exemples détaillés de réalisation, en référence aux figures annexées dans lesquelles, respectivement :
- la figure 1 est une vue en perspective éclatée d'un exemple de réalisation d'un dispositif d'actionnement conforme à l'invention,
- la figure 2 est une vue de côté du dispositif de la figure 1, assemblé, ledit dispositif ayant été illustré sans couvercle,
- la figure 3 est une vue de dessus d'après la figure 2,
- la figure 4 illustre en perspective, vue de dessous, le couvercle du dispositif des figures précédentes.

L'invention concerne un dispositif d'actionnement d'un ou plusieurs organes mobiles. Il pourra s'agir, par exemple, d'aubes d'une turbine d'un turbocompresseur, en particulier de véhicule automobile, dont on souhaite modifier l'orientation, notamment en fonction du débit de gaz d'échappement dans ladite turbine. Cela étant, de nombreux autres organes mobiles pourront être actionnés par le dispositif conforme à l'invention, en particulier des organes mobiles en rotation.

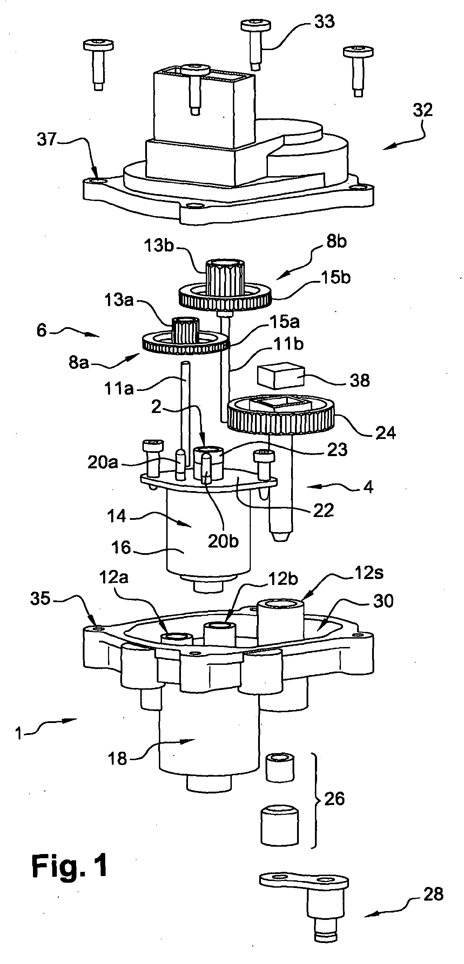

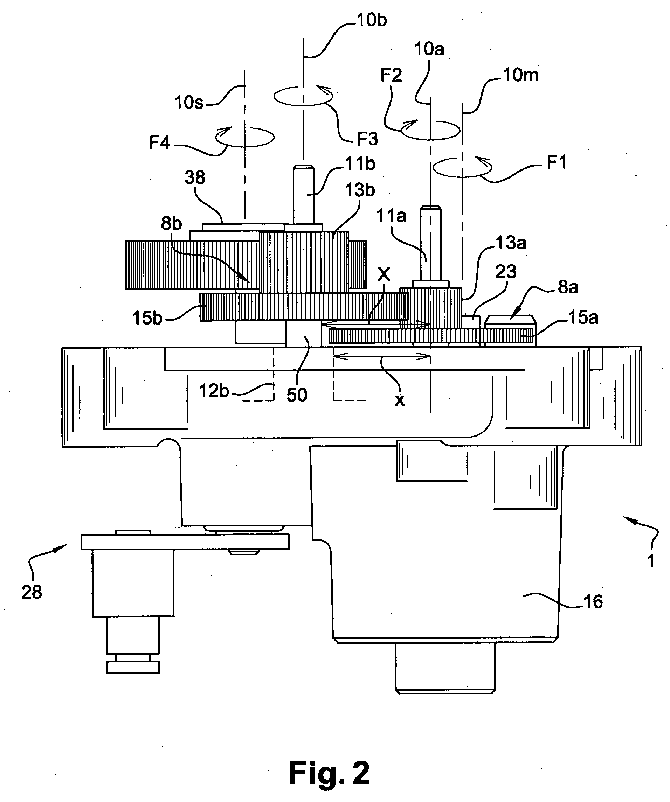

Comme illustré aux figures 1 et 2, ledit dispositif comprend ici un corps 1, notamment un corps issu de fonderie. Ledit corps 1 est, par exemple, en aluminium et/ou alliage d'aluminium.

Ledit dispositif comprend un arbre moteur 2, un arbre de sortie 4, et une cinématique 6 de transmission d'un couple dudit arbre moteur 2 audit arbre de sortie 4. Ladite cinématique de transmission 6 comprend au moins une, ici deux, roues 8a, 8b de transmission du couple dudit arbre moteur 2 audit arbre de sortie 4. Il s'agit, par exemple, de roues dentées à plusieurs pignons, plus particulièrement de roues dentées comprenant un petit pignon 13a, 13b associés coaxialement, sur un arbre 11a, 11b d'articulation, à un grand pignon 15a, 15b, ledit petit pignon d'une des roues engrénant sur le grand pignon d'une roue voisine.

Lesdits arbres moteur 2 et de sortie 4 et l'arbre d'articulation 11a, 11b, de la ou lesdites roues de transmission 8a, 8b, ainsi que le ou les pignons éventuellement associés, sont mobiles en rotation autour d'axes de pivotement respectifs 10m, 10a, 10b, 10s, ici parallèles entre eux. Ledit dispositif comprend en outre des fûts 12a, 12b, 12s d'articulation en pivotement de l'arbre 11a, 11b de la ou desdites roues de transmission 8a, 8b et/ou dudit arbre de sortie 4. Lesdits fûts 12a, 12b, 12s pourront être issus dudit corps 1.

Ledit dispositif comprend en outre ici un moteur 14, notamment électrique, d'entrainement en rotation dudit arbre moteur 1. Il s'agit, par exemple, d'un moteur dont le stator et le rotor, non-visibles, sont logés dans un carter cylindrique 16. En variante, il pourra s'agir, entre autres, d'un moteur à configuration plus aplatie aussi connu sous le nom de moteur plat. Ledit moteur 14 est ici logé dans une cavité 18 du corps 1, de forme complémentaire.

Ledit moteur 14 est muni d'au moins deux connecteurs 20a, 20b d'alimentation électrique, saillant dudit moteur 14 parallèlement audit arbre moteur 2. Autrement dit, ils s'étendent dans la même direction, ici orthogonalement à une même face 22 d'extrémité longitudinale dudit moteur 14. Il s'agit, par exemple, de broches métalliques planes.

Ledit arbre moteur 2 prolonge axialement le rotor dudit moteur 14 et se termine par un pignon 23 engrenant sur la cinématique de transmission 6.

Ladite cinématique 6 comprend ici une roue de sortie 24, liée audit arbre de sortie 4. Le pignon 23 de l'arbre moteur, les pignons 15a, 15b, 13a, 13b de la cinématique de transmission de couple et ladite roue de sortie 24 déterminent un rapport de réduction, choisi en fonction de l'application visée.

Ledit dispositif pourra également comprendre des paliers et/ou joint d'étanchéité 26 montés entre ledit corps 1 et ladite roue de sortie 24, en particulier dans ledit fût d'articulation correspondant 12s. Il pourra encore comprendre une manivelle 28 configurée pour actionner le ou lesdits organes mobiles à partir du couple fourni par ledit arbre de sortie 4. On pourra noter que ladite manivelle 28 permet un décalage radial de sorte que le carter 16 dans lequel est logé ledit moteur 14 ne fasse pas obstacle au débattement du ou des organes mobiles associés. En variante, un décalage axial au-delà du carter 16 est possible.

Ledit dispositif d'actionnement pourra être piloté par une unité de commande, non illustrée, pour entraîner ladite manivelle 28 en rotation et de la sorte provoquer un mouvement des organes mobiles liés à ladite manivelle 28, en fonction des caractéristiques du courant délivré au moteur 14. Plus précisément, ici, l'alimentation du moteur 14 entraine une rotation de l'arbre moteur 2, selon la flèche repérée F1, qui entraine par son pignon 23, la rotation de l'une première 8a des roues de transmission, selon la flèche repérée F2, qui entraine alors la rotation de l'autre 8b, seconde, des roues de transmission, selon la flèche repérée F3 qui entraine enfin la rotation de l'arbre de sortie 4 et par suite de ladite manivelle 28, selon la flèche repérée F4, par l'intermédiaire de ladite roue de sortie 24.

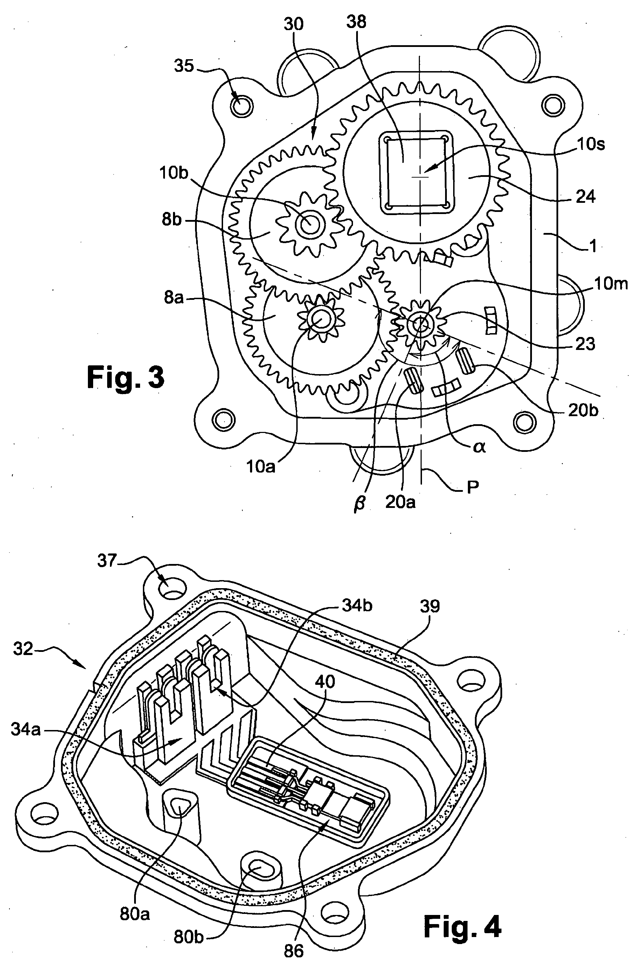

Comme cela ressort mieux de la figure 3, selon l'invention, l'axe de pivotement 10a, 10b de l'une au moins desdites roues de transmission 8a, 8b est décalé par rapport à un plan P passant par l'axe de pivotement 10m, 10s desdits arbres moteur et de sortie, ici lié audit pignon 23 et à ladite roue de sortie 24. Autrement dit, lesdits axes de pivotement 10a, 10b de la ou desdites roues de transmission 8a, 8b ne sont pas compris dans ledit plan P. On favorise de la sorte la compacité de la vanne par une meilleur répartition dans le plan de la figure des organes de transmission.

Avantageusement, lesdits axes de pivotement 10m, 10a, 10b, 10s sont positionnés de façon à ce qu'une ligne reliant radialement lesdits axes de pivotement soit une ligne brisée changeant de direction à chaque axe de pivotement 10m, 10a, 10b, 10s. Autrement dit, dans le plan de la figure 3, ladite ligne forme un polygone, ici un quadrilatère, dont les sommets sont lesdits axes de pivotement 10m, 10a, 10b, 10s. Il pourra en particulier s'agir d'un quadrilatère sensiblement de forme trapézoïdale.

Lesdits connecteurs 20a, 20b du moteur 14 sont placés à l'intérieur d'un secteur angulaire α formé à partir de l'axe de pivotement 10m de l'arbre moteur 2 et faisant moins de 180°, en particulier moins de 120°, ici environ 90°. Une telle disposition permet d'améliorer encore la compacité du dispositif.

Plus particulièrement, la première 8a desdites roues de transmission s'engrène sur ledit arbre moteur 2 et l'axe de pivotement 10a de ladite première roue 8a et lesdits connecteurs 20a, 20b sont placés à l'intérieur d'un secteur angulaire β formé à partir de l'axe de pivotement 10m de la roue moteur 2 et faisant moins de 180°.

Avantageusement, grâce au secteur angulaire réduit dans lequel les connecteurs 20a, 20b sont placés, une ou plusieurs autres roues de ladite cinématique 6, notamment ladite seconde roue de transmission 8b et/ou ladite roue de sortie 24, sont positionnées au moins en partie à l'aplomb dudit moteur d'entrainement 14, en particulier à l'aplomb de la face d'extrémité longitudinale 22 dudit moteur 14, d'où lesdits connecteurs 20a, 20b sont issus.

Ledit corps 1 définit ici un logement 30 dans lequel ledit arbre moteur 2 et/ou ledit arbre de sortie 4 débouchent et/ou dans lequel ladite cinématique de transmission 6 est située. Ledit dispositif pourra en outre comprendre un couvercle 32, visible figure 1, de fermeture dudit logement 30. Ledit couvercle 32 est ici fixé sur ledit corps 1 par des vis 33 venant se loger dans des trous taraudés 35 dudit corps 1 à travers des orifices 37 dudit couvercle 32. Un joint d'étanchéité 39 (figure 4) pourra être positionné entre ledit corps 1 et ledit couvercle 32 pour améliorer l'étanchéité du logement 30.

Comme cela est plus particulièrement illustré à la figure 4, ledit couvercle comprend des éléments de connexion électrique 34a, 34b, notamment des cosses, auxdits connecteurs 20a, 20b. Il comprend en outre ici un capteur de position angulaire 86, notamment une sonde à effet Hall, coopérant avec ledit arbre de sortie 4, par exemple grâce à une cible magnétique 38 située sur celui-ci (figure 3). En variante, ladite cible magnétique pourra être située sur ledit arbre moteur et/ou un organe de ladite cinématique de transmission 6, le positionnement de la sonde à effet Hall du couvercle étant alors bien naturellement adapté.

Lesdits éléments de connexion électriques 34a, 34b et/ou ledit capteur angulaire 86 sont, par exemple, surmoulés sur ledit couvercle 32, ici en compagnie de pistes électriques 40 d'un circuit électrique comprenant lesdits éléments de connexion électrique 34a, 34b et/ou ledit capteur angulaire 86.

Comme illustré à la figure 2, ledit dispositif comprend avantageusement une entretoise 50 disposée entre l'un desdits fûts 12b, dit fût court, dont le contour externe est illustré en pointillé à ladite figure, et celle desdites roues de transmission, ici la seconde roue 8b, dite roue de transmission surélevée, articulée sur ledit fût court 12b, selon l'axe de pivotement 10b de ladite roue surélevée 8b. Ladite entretoise 50 est avantageusement d'un diamètre externe inférieur à un diamètre externe dudit fût court 12b. Une telle caractéristique favorise encore la compacité du dispositif.

L'entretoise 50 est ici issue de matière de la roue surélevée 8a. Les fûts 12a, 12b des roues de transmission 8a, 8b présentent une hauteur, selon l'axe de pivotement de la roue correspondante, proche d'un fût à l'autre.

Le grand pignon 15b de la roue surélevée 8b engrène sur le petit pignon 13a de la première roue de transmission 8a, le grand pignon 15a de ladite première roue 8a étant positionné pour tourner en vis-à-vis de ladite entretoise 50. Ledit grand pignon 15a de ladite première roue 8a présente une extension radiale X supérieure à la distance x entre l'axe de pivotement 10a de ladite première roue 8a et le point le plus proche du diamètre extérieur dudit fût court 12b. On comprend mieux à la figure 2 l'avantage apporté en termes de compacité par de tels caractéristiques qui pourront bien sûr être transposées à d'autres roues du dispositif conforme à l'invention.

Ledit couvercle 32 comprend ici des fûts 80a, 80b issus de matière pour accueillir des extrémités supérieures des arbres d'articulation 11a, 11b desdites roues de transmission 8a, 8b.

## Revendications

1. Dispositif d'actionnement d'un ou plusieurs organes mobiles, notamment pour turbocompresseur de véhicule automobile, ledit dispositif comprenant un arbre moteur (2), un arbre de sortie (4), et une cinématique (6) de transmission d'un couple dudit arbre moteur (2) audit arbre de sortie (4), ladite cinématique (6) comprenant au moins une roue (8a,8b) de transmission du couple dudit arbre moteur (2) audit arbre de sortie (4), lesdits arbres moteur (2) et de sortie (4) et la ou lesdites roues de transmission (8a, 8b) étant mobiles en rotation autour d'axes de pivotement respectifs (10m, 10a, 10b, 10s), l'axe de pivotement de la ou de l'une au moins desdites roues de transmission (8a, 8b) étant décalé par rapport à un plan (P) comprenant les axes de pivotement desdits arbres moteur (2) et de sortie (4),
ledit dispositif d'actionnement comprenant un moteur d'entrainement (14) en rotation dudit arbre moteur (2) et dans lequel ledit moteur (14) est muni d'au moins deux connecteurs (20a, 20b) d'alimentation saillant dudit moteur (14) parallèlement audit arbre moteur (2) placés à l'intérieur d'un secteur angulaire formé à partir de l'axe de pivotement (10m) de l'arbre moteur (2) et faisant moins de 180°,
la ou lesdites roues de transmission (8a, 8b) comprenant respectivement un arbre (11a, 11b) d'articulation en rotation de la ou desdites roues de transmission (8a, 8b) autour de leur axe de pivotement (11a, 11b) et/ou ladite cinématique comprenant une roue de sortie (24), liée audit arbre de sortie (4), **caractérisé en ce que** ledit dispositif comprend en outre, d'une part, des fûts (12a, 12b) d'articulation en pivotement de l'arbre (11a, 11b) de la ou desdites roues de transmission (8a, 8b) et/ou dudit arbre de sortie (4), et, d'autre part, une entretoise (50) disposée entre l'un desdits fûts (12b), dit fût court, et celle (8b) desdites roues de transmission et/ou de sortie, dite roue surélevée, articulée sur ledit fût court (12b), selon l'axe de pivotement (10b) de ladite roue surélevée (8b), ladite entretoise (50) étant d'un diamètre externe inférieur à un diamètre externe dudit fût court (12b).

2. Dispositif selon la revendication 1 dans lequel lesdits axes de pivotement (10m, 10a, 10b, 10s) sont positionnés de façon à ce qu'une ligne reliant radialement lesdits axes de pivotement (10m, 10a, 10b, 10s) soit une ligne brisée changeant de direction à chaque axe de pivotement (10m, 10a, 10b, 10s).

3. Dispositif selon la revendication 1 dans lequel ledit secteur angulaire est inférieur à 120°.

4. Dispositif selon l'une quelconque des revendications 1 à 3 dans lequel l'une (8a), dite première, desdites roues de transmission s'engrène sur ledit arbre moteur (2) et dans lequel une ou plusieurs autres roues de transmission (8b, 24) de ladite cinématique (6) se trouvent au moins en partie à l'aplomb dudit moteur d'entrainement (14).

5. Dispositif selon l'une quelconque des revendications 1 à 4 comprenant un corps (1) définissant un logement (30) dans lequel ledit arbre moteur (2) et/ou ledit arbre de sortie (4) débouchent et/ou dans lequel ladite cinématique de transmission (6) est située.

6. Dispositif selon la revendication 5 comprenant un couvercle de fermeture (32) dudit logement (30), ledit couvercle (32) comprenant des éléments de connexion électrique (34a, 34b) auxdits connecteurs (20a, 20b) et/ou un capteur de position angulaire (86) coopérant avec ledit arbre moteur (2), ledit arbre de sortie (4) et/ou ladite cinématique de transmission (6).

7. Dispositif selon la revendication 6 dans lequel lesdits éléments de connexion électrique (34a, 34b) et/ou ledit capteur angulaire sont surmoulés sur ledit couvercle (32).

8. Dispositif selon l'une des revendications 1 à 7 dans lequel les fûts (12a, 12b) des dites roues de transmission (8a, 8b) présentent une hauteur, selon l'axe de pivotement de la roue correspondante (10a, 10b), proche d'un fût à l'autre.

9. Dispositif selon l'une quelconque des revendications 1 ou 8 dans lequel ladite roue surélevée (8b) engrène sur l'une (8a), voisine, desdites autres roues de transmission, comprenant un petit (13a) et un grand (15a) pignons, ledit petit pignon (13a) engrenant avec ladite roue surélevée (8b) et ledit grand pignon (15a) étant positionné pour tourner en vis-à-vis de ladite entretoise (50).

10. Dispositif selon la revendication 9 dans lequel ledit grand pignon (15a) présente une extension radiale supérieure à la distance entre l'axe de pivotement (10a) de la roue (8a) comprenant lesdits petit et grand pignons et le point le plus proche du diamètre extérieur dudit fût court (12b).

11. Dispositif selon l'une quelconque des revendications précédentes comprenant une manivelle (28) configurée pour actionner le ou lesdits organes mobiles à partir du couple fourni par ledit arbre de sortie (4).

12. Ensemble du dispositif d'actionnement selon l'une quelconque des revendications précédentes et du ou des organes mobiles destinés être actionnés par ledit dispositif.

## Patentansprüche

1. Vorrichtung zur Betätigung einer oder mehrerer beweglicher Glieder, insbesondere für einen Turbokompressor eines Kraftfahrzeugs, wobei die genannte Vorrichtung eine Motorwelle (2), eine Ausgangswelle (4), und eine Kinematik (6) zur Übertragung eines Drehmoments der genannten Motorwelle (2) auf die genannte Ausgangswelle (4) umfasst, wobei die genannte Kinematik (6) mindestens ein Rad (8a, 8b) zur Übertragung des Drehmoments der genannten Motorwelle (2) auf die genannte Ausgangswelle (4) umfasst, wobei die genannte Motorwelle (2) und die genannte Ausgangswelle (4) und das oder die genannte/n Räder zur Übertragung (8a, 8b) um jeweilige Schwenkachsen (10m, 10a, 10b, 10s) drehbar sind, wobei die Schwenkachse des oder mindestens eines der genannten Räder zur Übertragung (8a, 8b) bezogen auf eine Ebene (P), die die Schwenkachsen der genannten Motorwelle (2) und der genannten Ausgangswelle (4) umfasst, versetzt ist,
wobei die genannte Vorrichtung zur Betätigung einen Motor (14) zum Drehantrieb der genannten Motorwelle (2) umfasst, und bei der der genannte Motor (14) mit mindestens zwei Verbindern (20a, 20b) zur Stromversorgung, die aus dem genannten Motor (14) parallel zu der genannten Motorwelle (2) hinausragen und innerhalb eines Winkelbereichs, der ausgehend von der Schwenkachse (10m) der Motorwelle (2) gebildet wird und weniger als 180° ergibt, platziert sind, versehen ist,
wobei das oder die genannten Räder zur Übertragung (8a, 8b) jeweils eine Welle (11a, 11b) zur Rotationsanlenkung des oder der genannten Räder zur Übertragung (8a, 8b) um ihre Schwenkachse (11a, 11b) umfassen und/oder die genannte Kinematik ein Ausgangsrad (24), das mit der genannten Ausgangswelle (4) verbunden ist, umfasst, **dadurch gekennzeichnet, dass** die genannte Vorrichtung darüber hinaus einerseits Hülsen (12a, 12b) zur Schwenkanlenkung der Welle (11a, 11b) des oder der genannten Räder zur Übertragung (8a, 8b) und/oder der genannten Ausgangswelle (4) und andererseits einen Steg (50), der angeordnet ist zwischen einer der genannten Hülsen (12b), genannt kurze Hülse, und desjenigen (8b) der genannten Übertragungsräder und/oder Ausgangsräder, genannt überhöhtes Rad, das an der genannten kurzen Hülse (12b), nach der Schwenkachse (10b) des genannten überhöhten Rads (8b), angelenkt ist, umfasst, wobei der genannte Steg (50) einen Außendurchmesser besitzt, der kleiner als ein Außendurchmesser der genannten kurzen Hülse (12b) ist.

2. Vorrichtung nach Anspruch 1, bei der die genannten Schwenkachsen (10m, 10a, 10b, 10s) dergestalt positioniert sind, dass eine Linie, die die genannten Schwenkachsen (10m, 10a, 10b, 10s) radial verbindet, eine unterbrochene Linie, die bei jeder Schwenkachse (10m, 10a, 10b, 10s) die Richtung ändert, ist.

3. Vorrichtung nach Anspruch 1, bei der der Winkelbereich geringer als 120° ist.

4. Vorrichtung nach einem der Ansprüche 1 bis 3, bei der eines (8a), genannt erstes, der genannten Räder zur Übertragung an der genannten Motorwelle (2) eingreift und bei der ein oder mehrere andere Räder zur Übertragung (8b, 24) der genannten Kinematik (6) sich mindestens teilweise senkrecht zum genannten Antriebsmotor (14) befinden.

5. Vorrichtung nach einem der Ansprüche 1 bis 4 umfassend einen Körper (1), der eine Aufnahme (30) definiert, in die die genannte Motorwelle (2) und/oder die genannte Ausgangswelle (4) ausmünden und/oder in der sich die genannte Kinematik zur Übertragung (6) befindet.

6. Vorrichtung nach Anspruch 5 umfassend einen Schließdeckel (32) der genannten Aufnahme (30), wobei der genannte Deckel (32) Elemente zur elektrischen Verbindung (34a, 34b) mit den genannten Verbindern (20a, 20b) und/oder einen Winkelpositionssensor (86), der mit der genannten Motorwelle (2), der genannten Ausgangswelle (4) und/oder der genannten Kinematik zur Übertragung (6) zusammenwirkt, umfasst.

7. Vorrichtung nach Anspruch 6, bei der die genannten Elemente zur elektrischen Verbindung (34a, 34b) und/oder der genannte Winkelsensor auf dem genannten Deckel (32) aufgeformt sind.

8. Vorrichtung nach einem der Ansprüche 1 bis 7, bei der die Hülsen (12a, 12b) der genannten Räder zur Übertragung (8a, 8b) eine Höhe, nach der Schwenkachse des entsprechenden Rads (10a, 10b), nahe der Höhe der anderen Hülse aufweisen.

9. Vorrichtung nach einem der Ansprüche 1 bis 8, bei der das genannte überhöhte Rad (8b) eingreift in ein (8a), benachbartes, der genannten anderen Räder zur Übertragung, umfassend ein kleines (13a) und ein großes (15a) Ritzel, wobei das genannte kleine Ritzel (13a) mit dem genannten überhöhten Rad (8b) in Eingriff ist und das genannte große Ritzel (15a) positioniert ist, um gegenüber des genannten Stegs (50) zu drehen.

10. Vorrichtung nach Anspruch 9, bei der das genannte große Ritzel (15a) eine radiale Erweiterung aufweist, die größer als der Abstand zwischen der Schwenkachse (10a) des Rads (8a), das das genannte kleine und das genannte große Ritzel umfasst, und dem nächsten Punkt zum Außendurchmesser der genannten kurzen Hülse (12b) ist.

11. Vorrichtung nach einem der vorangehenden Ansprüche, umfassend eine Kurbel (28), die konfiguriert ist, um das oder die genannten beweglichen Glieder ausgehend vom Drehmoment, das durch die genannte Ausgangswelle (4) geliefert wird, zu betätigen.

12. Baugruppe der Vorrichtung zur Betätigung nach einem der vorangehenden Ansprüche und des oder der beweglichen Glieder, die dazu bestimmt sind, durch die genannte Vorrichtung betätigt zu werden.

## Claims

1. Device for actuating one or more moving parts, in particular for a motor vehicle turbocharger, the said device comprising a drive shaft (2), an output shaft (4), and a transmission system (6) for transmitting a torque from the said drive shaft (2) to the said output shaft (4), the said transmission system (6) comprising at least one wheel (8a,8b) for transmitting the torque from the said drive shaft (2) to the said output shaft (4), the said drive shaft (2) and output shaft (4) and the said transmission wheel(s) (8a, 8b) being rotatable about respective pivot axes (10m, 10a, 10b, 10s), the pivot axis of the or of at least one of the said transmission wheel (s) (8a, 8b) being offset from a plane (P) comprising the pivot axes of the said drive shaft (2) and output shaft (4),
the said actuating device comprising a motor (14) for rotationally driving the said drive shaft (2) and wherein the said motor (14) is provided with at least two power supply connectors (20a, 20b) projecting from the said motor (14)) parallel to the said drive shaft (2) and positioned inside an angular sector formed extending from the pivot axis (10m) of the drive shaft (2) and forming an angle of less than 180º,
the said transmission wheel(s) (8a, 8b) comprising respectively a shaft (11a, 11b) for rotatably mounting the said transmission wheel (s) (8a, 8b) about their pivot axis (11a, 11b) and/or the said transmission system comprising an output wheel (24), connected to the said output shaft (4), **characterized in that** the said device further comprises, on the one hand, sleeves (12a, 12b) for pivotably mounting the shaft (11a, 11b) of the said transmission wheel (s) (8a, 8b) and/or the said output shaft (4) and, on the other hand, a spacer (50) arranged between one of the said sleeves (12b), i.e. short sleeve, and the wheel (8b) of the said transmission and/or output wheels, i.e. raised wheel, pivotably mounted on the said short sleeve (12b), along the pivot axis (10b) of the said raised wheel (8b), the said spacer (50) having an external diameter smaller than an external diameter of the said short sleeve (12b).

2. Device according to Claim 1, wherein the said pivot axes (10m, 10a, 10b, 10s) are positioned so that a line radially connecting the said pivot axes (10m, 10a, 10b, 10s) is a broken line changing direction at each pivot axis (10m, 10a, 10b, 10s).

3. Device according to Claim 1, wherein the said angular sector is less than 120º

4. Device according to any one of Claims 1 to 3, wherein one wheel, i.e. a first wheel, of the said transmission wheels meshes with the said drive shaft (2) and wherein one or more other transmission wheels (8b, 24) of the said transmission system (6) are located at least partly vertically aligned with the said drive motor (14).

5. Device according to any one of Claims 1 to 4, comprising a body (1) defining a seat (30) inside which the said drive shaft (2) and/or the said output shaft (4) protrude and/or inside which the said transmission system (6) is situated.

6. Device according to Claim 5, comprising a cover (32) for closing the said seat (30), the said cover (32) comprising elements (34a, 34b) for electrical connection to the said connectors (20a, 20b) and/or an angular position sensor (86) cooperating with the said drive shaft (2), the said output shaft (4) and/or the said transmission system (6).

7. Device according to Claim 6, wherein the said electrical connection elements (34a,34b) and/or the said angular sensor are overmolded on the said cover (32).

8. Device according to one of claims 1 to 7, wherein the sleeves (12a, 12b) of the said transmission wheels (8a, 8b) have a height, along the pivot axis of the corresponding wheel (10, 10b), similar from one sleeve to another.

9. Device according to either one of Claims 1 or 8, wherein the said raised wheel (8b) meshes with one - adjacent - wheel (8a) of the said other transmission wheels, comprising a small pinion (13a) and large pinion (15a), the said small pinion (13a) meshing with the said raised wheel (8b) and the said large pinion (15a) being positioned so as to rotate opposite the said spacer (50).

10. Device according to Claim 9, wherein the said large pinion (15a) has a radial extension greater than the distance between the pivot axis (10a) of the wheel (8a) comprising the said small and large pinions and the closest point of the external diameter of the said short sleeve (12b).

11. Device according to any one of the preceding claims, comprising a crank (28) designed to actuate the said moving part(s) using the torque supplied by the said output shaft (4).

12. Assembly consisting of the actuating device according to any one of the preceding claims and the moving part(s) intended to be actuated by the said device.
